# EUROPÄISCHE PATENTSCHRIFT

(11) **EP 2 136 043 B1**
(45) Veröffentlichungstag und Bekanntmachung des Hinweises auf die Patenterteilung: **15.09.2010**
(21) Anmeldenummer: 09004962.8
(22) Anmeldetag: 03.04.2009
(51) Int. Cl.: F01N 3/021, B01D 45/02, B01D 45/08

(54) **Partikelabscheider sowie Verfahren zur Abscheidung von Partikeln aus einem Abgasstrom einer Brennkraftmaschine**
Particle separator and method for separating particles from an exhaust gas flow of a combustion engine
Séparateur de particules et procédé de séparation de particules à partir d'un flux de gaz d'un moteur à combustion interne

(30) Priorität: 21.06.2008 DE 102008029520
(43) Veröffentlichungstag der Anmeldung: 23.12.2009
(73) Patentinhaber: MAN Nutzfahrzeuge Aktiengesellschaft, 80995 München (DE)
(72) Erfinder: Döring, Andreas, 80339 München (DE); Tilinski, Marco, 90571 Schwaig (DE)

(56) Entgegenhaltungen:
- EP-A- 0 839 566
- DE-A1- 3 609 221
- US-A- 2 372 316

## Beschreibung

Die Erfindung betrifft einen Partikelabscheider zur Abscheidung von Partikeln aus einem Abgasstrom einer Brennkraftmaschine nach dem Oberbegriff des Anspruchs 1 sowie ein Verfahren zur Abscheidung von Partikeln aus einem Abgasstrom einer Brennkraftmaschine nach dem Oberbegriff des Anspruchs 35.

Bei der dieselmotorischen Verbrennung, wie auch bei der ottomotorischen Direkteinspritzung, kommt es zur Emission von Partikeln, die unter anderem durch die unvollständige Verbrennung des Kraftstoffes entstehen und überwiegend aus hochoberflächigem Kohlenstoff bestehen. Um diesen hochoberflächigen Kohlenstoff zu verbrennen, schlägt die GB 895, 990 A vor, diesen mit NO₂ als Oxidationsmittel anstelle von Sauerstoff zu verbrennen.

Weiter ist es aus der US 4, 902, 487 bekannt, Kohlenstoffpartikel an einem Filter abzuscheiden und anschließend durch NO₂ zu oxidieren. Zur Erzeugung des NO₂ kann z. B. gemäß der DE 28 320 02 das im Abgasstrom der Brennkraftmaschine enthaltene NO an einem platinhaltigen Katalysator zu NO₂ aufoxidiert werden. Der Anteil des NO₂ im Verhältnis zu dem Gesamt-NOₓ wird dabei deutlich angehoben, wobei diese Reaktion ab ungefähr 180°C abläuft. Die Verbrennung der Partikel durch NO₂ beginnt dagegen bei Temperaturen ab 250°C. Eine Partikeloxidation in der Gasphase findet so gut wie nicht statt. Es ist hierzu eine Anlagerung an einem Feststoff nötig, um eine ausreichende Verweilzeit zu sichern, was üblicherweise durch den Einsatz eines Partikelfilters realisiert wird.

Ein wesentlicher Nachteil einer derartigen Verfahrensführung besteht jedoch im hohen Abgasgegendruck, der durch den Filter verursacht wird. Dieser macht sich in einem erhöhten Kraftstoffverbrauch bemerkbar. Zudem setzen sich am Filter während des Betriebs auch nicht brennbare Bestandteile ab, wie z. B. Schmierölasche. Dadurch steigt der Abgasgegendruck immer weiter an, so dass der Filter regelmäßig und oft ausgetauscht werden muss, um einen noch weiter erhöhten Kraftstoffverbrauch sowie gegebenenfalls eine Schädigung der Brennkraftmaschine zu vermeiden. Des Weiteren kann es bei einer unzureichenden Oxidation zu einer immer weiteren Belegung mit Ruß kommen, was schließlich zu der Verstopfung des Filters führen kann.

Um diese Nachteile zu vermeiden, ist es aus der EP1 072 765 B1 bereits bekannt, einen filterlosen Partikelabscheider einzusetzen, bei dem der Abgasstrom entlang einer strukturierten Oberfläche entlanggeführt sowie ständig umgelenkt wird, um Feinstpartikel durch insbesondere Diffusion aus dem Abgasstrom abscheiden zu können. Nachteilig ist hierbei jedoch, dass aufgrund der ständig wechselnden Abgastemperaturen und der ständig wechselnden NOₓ-Rohemissionen bei instationär betriebenen Brennkraftmaschinien, wie dies bei Fahrzeugen der Fall ist, oftmals nicht ausreichend NO₂ zur Verfügung steht, um den abgeschiedenen Ruß zu oxidieren. Dies bedeutet, dass der Partikelabscheider die Partikel solange speichern muss, bis zu einem späteren Zeitpunkt ausreichend NO₂ zur Oxidation des abgeschiedenen Rußes vorhanden ist. Um dies sicherzustellen wird in der DE 101 53 284, in der DE 101 53 283 und in der DE 201 178 73 U1 vorgeschlagen, die abgeschiedenen Partikel in einem Vlies zu speichern. Allerdings sind die derart speicherbaren Partikelmengen aufgrund des geringen Volumens des Vlieses relativ gering. Des Weiteren ist die Herstellung des Vlieses sehr kostenintensiv.

Aus der EP 0 839 566 A1 ist es weiterhin bekannt, aus einem Abgasstrom Partikel mittels Massenträgheit dadurch abzuscheiden, dass der Abgasstrom in ein einseitig verschlossenes Rohr eingeleitet wird, so dass sich die Partikel durch ihr Beharrungsvermögen an dem verschlossenen Ende sammeln und die Gasförmigen Bestandteile des Abgasstroms über die Zuströmöffnung wieder ausströmen. Der Wirkungsgrad einer solchen Anordnung ist jedoch gering.

Demgegenüber ist es Aufgabe der vorliegenden Erfindung, einen Partikelabscheider sowie ein Verfahren zur Abscheidung von Partikeln aus einem Abgasstrom einer Brennkraftmaschine zur Verfügung zu stellen, mittels dem Partikel auf einfache Weise zuverlässig aus dem Abgasstrom abgeschieden werden könne.

Diese Aufgabe wird bezüglich des Partikelabscheiders gelöst mit den Merkmalen des Anspruchs 1. Bezüglich des Verfahrens wird diese Aufgabe gelöst mit den Merkmalen des Anspruchs 34. Vorteilhafte Ausgestaltungen hierzu sind jeweils Gegenstand der darauf rückbezogenen Unteransprüche.

Erfindungsgemäß ist im Partikelabscheider eine vorgegebene Anzahl von Strömungszellen ausgebildet, in die ein Abgasstrom über eine Seitenwand der jeweiligen Strömungszelle ein- und/oder ausströmt und in der wenigstens ein Speichervolumen zur Einlagerung von Partikeln aus dem Abgasstrom ausgebildet ist. Für ein derartiges Ein- bzw. Ausströmen des Abgasstroms über eine Seitenwand einer Strömungszelle, insbesondere über wenigstens eine in einer derartigen Seitenwand der Strömungszelle ausgebildete Durchströmöffnung kann auf funktionssichere und einfache Weise zum einen eine dauerhafte Umlenkung des Abgasstromes innerhalb des Partikelabscheiders bzw. die Aufteilung des Abgasstromes in eine Vielzahl von einzelnen Teilabgasströmen erfolgen, wobei Strömungstotzonen und/oder Turbulenzen erzeugt werden, mittels denen dann eine Abscheidung der Partikel eines Abgasstromes auf einfache Weise eingestellt werden kann. Erfindungsgemäß findet die Einlagerung bzw. Zwischenspeicherung der Partikel dabei in den von der Strömungszelle selbst ausgebildeten Speichervolumina bzw. Strömungstotzonen statt, die durch die seitlichen Durchströmöffnungen von der Strömung in der Strömungszelle abgekoppelte Bereiche ausbilden, in denen keine oder nur eine geringe Strömungsgeschwindigkeit vorhanden ist, die aber ein ausreichend großes Volumen darstellen, um die Partikel dort einlagern zu können.

Unter einer Seitenwand wird hier der bezogen auf die Hauptströmungsrichtung seitliche Wandbereich verstanden, der insbesondere im Wesentlichen parallel zur Hauptströmungsrichtung ausgerichtet ist. Im Gegensatz dazu bilden die quer zur Hauptströmungsrichtung ausgebildeten Zellenwände vorliegend zur besseren Unterscheidung Boden- oder Stirnwände aus.

Der Partikelabscheider weist bevorzugt eine Mehrzahl von insbesondere in Hauptströmungsrichtung des Abgasstromes gesehen hintereinander und/oder nebeneinander und/oder übereinander angeordneten Strömungszellen auf, die, im Querschnitt durch den Partikelabscheider betrachtet, eine Art Wabenprofil ausbilden. Mit einer derartigen Mehrzahl von einzelnen Strömungszellen ist eine besonders effektive Umlenkung des Abgasstroms unter Ausbildung von Strömungstotzonen und/oder Turbulenzzonen möglich, was wiederum zu einer effektiven Abscheidung von Partikeln, insbesondere von Feinstpartikeln durch Diffusion in die Speichervolumina führt.

Wie bereits zuvor angedeutet, ist das Speichervolumen jeder Speicherzelle bevorzugt durch wenigstens ein sacklochartiges Totraumvolumen, insbesondere durch wenigstens einen sacklochartigen Strömungszellen-Kanalabschnitt gebildet. Diese sind einfach und damit preiswert herzustellen.

Die Strömungszellen weisen bevorzugt in einem vorgegebenen Bereich der Seitenwand wenigstens eine Ein- und/oder Ausströmöffnungen ausbildende Durchströmöffnung auf. Bevorzugt ist hierbei vorgesehen, dass jede Strömungszelle wenigstens eine Durchströmöffnung zu jeder an einem Seitenwandbereich angrenzenden Strömungszelle aufweist. Insbesondere ist hierbei bevorzugt, dass in Hauptströmungsrichtung benachbarte Strömungzellen so gegeneinander versetzt angeordnet sind, dass eine Ausströmöffnung einer ersten Strömungszelle eine Einströmöffnung einer zweiten Strömungszelle ausbildet.

Das sacklochartige Totraumvolumen ist in Hauptströmungsrichtung des Abgasstroms gesehen in wenigstens einem stirnseitigen Endbereich jeder Strömungszelle ausgebildet, wobei dieses sacklochartige Totraumvolumen zudem in Hauptströmungsrichtung des Abgasstroms gesehen vor und/oder nach der wenigstens einen Durchströmöffnung angeordnet ist. Damit lässt sich auf konstruktiv einfache Weise das Speichervolumen für die abzuscheidenden Partikel in den einzelnen Strömungszellen ausbilden.

Gemäß einer bevorzugten konkreten Ausgestaltung ist das sacklochartige Totraumvolumen durch eine im Wesentlichen senkrecht zur Hauptströmungsrichtung ausgerichtete Prallbodenwand gebildet, die damit eine im Wesenttichen senkrecht zur Hauptströmungsrichtung ausgerichtete Boden- oder Stirnwand der Strömungszelle ausbildet.

Die Oxidation der abgeschiedenen, kohlenstoffhaltigen Partikel kann durch Anhebung der Abgastemperatur und/oder mit Hilfe von, an einem Katalysator zur Oxidation von NO gebildetem, NO₂ erfolgen bzw. beschleunigt werden.

In den oben beschriebenen sacklochartigen Totraumvolumina kann eine große Menge von Partikeln, insbesondere von Ruß eingelagert werden. Allerdings dringt das für die Oxidation der Partikel notwendige NO₂ hauptsächlich durch den relativ langsamen Vorgang der Diffusion in die Totraumvolumina ein. Dies kann dazu führen, dass die Partikeloxidation auf Grund eines lokalen NO₂-Mangels, bedingt durch die zu langsame Zuführung von Stickstoffdioxid, in den z. B. Sacklöchern als Speichervolumina relativ schlecht ist. Daher ist es sinnvoll, einen kleinen Teil der NO₂-haltigen Strömung in Form eines Bypasses durch das z. B. Sackloch als Speichervolumen zu führen. Dabei ist jedoch darauf zu achten, dass die Strömungsgeschwindigkeit nicht zu hoch wird, um ein Ausblasen der aufgefangenen Partikel zu verhindern. Die Bypassströmung kann durch Perforation des Wandbereichs der Speichervolumina und/oder durch Verwendung eines porösen Materials realisiert werden. Insbesondere in Verbindung mit der Perforation der z. B. als Sackloch ausgebildeten Speichervolumina hat es sich als vorteilhaft erwiesen, nicht mehr als 30% des Abgasstroms eines jeweiligen Strömungsbereiches durch die z. B. Sacklöcher abströmen zu lassen, um ein Aufwirbeln der dort abgeschiedenen Partikel zu verhindern.

Grundsätzlich können dabei in einem Partikelabscheider sämtliche bzw. wenigstens ein großer vorgegebener Teil der Strömungszellen insbesondere bezüglich ihrer Ausgestaltung bzw. Formgebung und/oder Größe im Wesentlichen gleich ausgebildet sein. Damit kann sichergestellt werden, dass sich in jeder Strömungszelle im Wesentlichen stets gleiche Strömungsverhältnisse, ausbilden.

Alternativ dazu kann aber auch vorgesehen sein, dass sich hinsichtlich der Strömungsverhältnisse, insbesondere sich hinsichtlich der Strömungsgeschwindigkeit und/oder der Verweilzeit des Abgasstromes in der jeweiligen Strömungszelle, unterscheidenende Strömungszellen vorgesehen sind, um Partikel unterschiedlicher, definierter Größenordnung in den dann unterschiedlichen Strömungszellen abzuscheiden. Diese unterschiedlichen Strömungszellen können z. B. unterschiedlich große freie Strömungsquerschnitte aufweisen. Mit derartigen unterschiedlichen Strömungszellen werden somit unterschiedliche Strömungsbereiche ausgebildet, z. B. Strömungstotzonen und/oder Turbulenzzonen, die die Abscheidung der Feinstpartikel durch Diffusion gewährleisten, während in anderen, bevorzugt räumlich abgetrennten Bereichen, die Strömungsgeschwindigkeit des Abgasstroms so erhöht und dieser Abgasstrom anschließend so abrupt umgelenkt wird, dass die schwereren Partikel aufgrund ihrer höheren Massenträgheit dem Abgasstrom im Bereich der Umlenkung nicht mehr folgen können und im Wesentlichen geradeaus weiterfliegen. Stromab dieser Umlenkung sind dann z. B. die Speichervolumina vorgesehen, in denen dann die Partikel aufgefangen werden können.

Bevorzugt weist somit der Partikelabscheider Mittel auf, durch die der Abgasstrom im Partikelabscheider wiederholt umgelenkt und/oder in Teilabgasströme aufgeteilt und/oder beschleunigt und/oder verzögert werden kann, um den unterschiedlichsten Anforderungen an die Partikelabscheidung in Verbindung mit einem erfindungsgemäßen Partikelabscheider sicherstellen zu können. Hierfür gibt es verschiedene Möglichkeiten. Ein besonders kostengünstiger Aufbau des Partikelabscheiders ergibt sich dann, wenn dieser als Plattenabscheider aus einer Mehrzahl von miteinander in übereinanderliegenden Lagen verbundenen Abscheiderplatten gebildet ist, die ein Plattenpaket ausbilden. Die unterschiedlichen Strömungsbereiche und/oder die Umlenkbereiche und/oder die Abtrennbereiche und/oder die Auffangbereiche und/oder die Speicherbereiche und/oder die Durchströmöffnungen können dabei ganz allgemein gesehen durch Materialumformungen und/oder Materialverformungen und/oder Materialverprägungen und/oder Materialausnehmungen an vorgegebenen Bereichen wenigstens eines Teils der Abscheiderplatten eines Plattenpaketes auf einfache Weise ausgebildet werden. Hierfür ist es von Vorteil, dass wenigstens ein Teil der Abscheiderplatten eines Plattenpaketes im Wesentlichen identisch ausgebildet ist, was jedoch nicht zwingend erforderlich ist.

Besonders bevorzugt sind die einzelnen Abscheiderplatten dabei durch Folien und/oder Matten vorgegebener Wandstärke gebildet. Derartige Folien und/oder Matten lassen sich sehr einfach umformen, z. B. dergestalt, dass wenigstens eine der Folien gewellt ist, wobei der Begriff "Wellung" hier in einem weiteren Sinne zu verstehen ist, und insbesondere auch ziehharmonikaförmig geknickte Formgebungen oder dergleichen umfassen soll. Mit derartigen gewellten z. B. Folien als Abscheiderplatten lässt sich in Kombination mit weiteren z. B. als Folie ausgebildeten Abscheiderplatten auf einfache Weise die entsprechend gewünschte Anzahl und Geometrie von Strömungskanälen des Partikelabscheiders ausbilden. Durch Einschnürungen bzw. Eindellungen, gleiche oder unterschiedliche Wellenamplituden (Höhenerstreckung) und/oder unterschiedliche oder gleiche Wellenfrequenzen (Anzahl der Wellen) lässt sich relativ einfach der freie Strömungsquerschnitt und damit die Strömungsgeschwindigkeit verändern oder eine Umlenkung erzielen oder können einzelne Bereiche komplett von der Strömung abgetrennt werden, um z. B. die gewünschten Speichervolumen bzw. Totzonen zu schaffen. Besonders bevorzugt können dabei in Strömungsrichtung gesehen aufeinanderfolgende Einschnürungen das Wellprofil im Wechsel einmal von der Oberseite und einmal von der Unterseite her einschnüren. Weiter können die Einschnürungen bezüglich unterschiedlicher Plattenebenen auch versetzt zueinander angeordnet sein, z. B. dergestalt, dass die Einschnürungen bezüglich benachbarter Plattenebenen um den hälftigen Abstand zwischen den Einschnürungen gegeneinander versetzt sind.

Zudem können derartige durch z. B. Folien und/oder Matten gebildete Abscheiderplatten auf einfache Weise perforiert werden, wodurch ein Übergang in benachbarte Strömungskanäle möglich wird.

Als besonders vorteilhaft hat es sich erwiesen, z. B. Folien als Abscheiderplatten unterschiedlicher Amplitude und/oder Frequenz der Wellung oder Knickung abwechselnd anzuordnen, so dass Bereiche unterschiedlicher Strömungsquerschnitte, also unterschiedlicher Zelldichten und damit unterschiedlichen Strömungsgeschwindigkeiten, entstehen. Bilden die Folien z. B. parallele Strömungskanäle aus, sollte eine Glattlage als Zwischenlage vorgesehen werden, um ein Ineinanderrutschen der gewellten Folien zu verhindern. Selbstverständlich ist es auch möglich, die Amplitude und/oder Frequenz der Wellung oder Knickung entlang einer Abscheiderplatte, z. B. einer Folie, zu verändern.

Die Abscheiderplatten können z. B. aus einem keramischen und/oder metallischen und/oder siliziumhaltigen und/oder siliziumcarbidhaltigen und/oder quarzhaltigen und/oder faserartigen Material hergestellt sein. Die Abscheiderplatten können dabei wenigstens in Teilbereichen eine Oberflächenstruktur mit definierter, d. h. vorgegebener Rauheit bzw. Rauhtiefe aufweisen, z. B. durch die nachfolgend noch näher beschriebene mechanische Bearbeitung. Der Übergang in die einzelnen Bereiche, insbesondere die Durchströmöffnung zu den benachbarten Strömungszellen kann dabei durch Perforation und/oder Schlitzung der z. B. Folien und/oder Matten als Abscheiderplatten erfolgen.

Wie bereits oben beschrieben, kann die Oxidation der abgeschiedenen, kohlenstoffhaltigen Partikel durch Anhebung der Abgastemperatur und/oder mit Hilfe von, an einem Katalysator zur Oxidation von NO gebildetem, NO₂ erfolgen bzw. beschleunigt werden. Aufgrund der wechselnden bzw. zeitweise zu niedrigen Abgastemperaturen und der wechselnden NOₓ-Rohemissionen gelingt es speziell bei instationär betriebenen Brennkraftmaschinen nicht immer, den zum jeweiligen Zeitpunkt anfallenden Ruß sofort mit Hilfe hoher Abgastemperaturen und/oder NO₂ zu oxidieren. Das bedeutet, dass der Abscheider die Partikel so lange speichern muss, bis zu einem späteren Zeitpunkt ausreichend NO₂ zur Oxidation des abgeschiedenen Rußes vorhanden ist. Dies kann z. B. dadurch bewerkstelligt werden, dass die Haftung der Partikel an der Oberfläche des Partikelabscheiders bzw. der Abscheiderplatten verbessert wird. Hierfür sollten Oberflächen mit hohen Rauigkeiten verwendet werden. Bei Metallfolien bedeutet dies, dass sie beispielsweise durch mechanische Bearbeitung angerauht werden können. Dies kann z. B. durch Bürsten, Schleifen, Kratzen, Strahlen (z. B. Sandstrahlen), Coronabestrahlung, Prägen oder Nadeln geschehen. Auch eine chemische Behandlung wie Ätzen, Galvanisieren oder Eloxieren ist denkbar. Außerdem kann die Legierung der z. B. Folie als Abscheiderplatte so angepasst werden, dass sich deren Oberflächenstruktur unter Wärmeeinwirkung und/oder durch Variation des pH-Wertes verändert. Ein Beispiel hierfür ist das Zufügen größerer Mengen von Aluminium. Dieses wandert bei hohen Temperaturen an die Oberfläche und bildet dort ein Aluminiumcluster.

Gemäß einer weiteren besonders bevorzugten Ausgestaltung der Erfindung kann zudem vorgesehen sein, den Partikelabscheider wenigstens in Teilbereichen katalytisch aktiv auszugestalten, insbesondere mit einer katalytisch aktiven Beschichtung zu beschichten.

Besonders vorteilhaft ist es, in Verbindung mit einer konkreten Ausführungsform, den wenigstens einen Partikelabscheider zusammen mit wenigstens einer Katalysatoreinrichtung in einem Schalldämpfer einer Abgasanlage anzuordnen.

Die Erfindung wird nachfolgend anhand einer Zeichnung näher erläutert.

Es zeigen:
- Fig. 1: eine schematische Draufsicht auf einen Teilbereich eines erfin- dungsgemäßen Partikelabscheiders mit hier im Wesentlichen i- dentisch ausgebildeten Strömungszellen,
- Fig. 2: schematisch einen Querschnitt durch eine erfindungsgemäßen Partikelabscheider, der beispielhaft zwei übereinanderliegende Welllagen mit unterschiedlicher Amplitude, d. h. Wellenhöhe, aber gleicher Frequenz zeigt, wobei zwischen den beiden Wellenlagen eine Glattlage vorgesehen ist,
- Fig. 3: schematisch eine Darstellung gemäß Figur 2, jedoch bezüglich einer anderen, Eindellungen zeigenden Schnittebene,
- Fig. 4: schematisch einen perspektivischer Ausschnitt aus einem erfin- dungsgemäßen Partikelabscheider,
- Fig. 5: eine schematische Seitenansicht eines konkreten, durch mehrere Wellblechlagen gebildeten Partikeiabscheiders, und
- Fig. 6: eine schematische, perspektivische Darstellung einer einzelnen Wellblechlage.

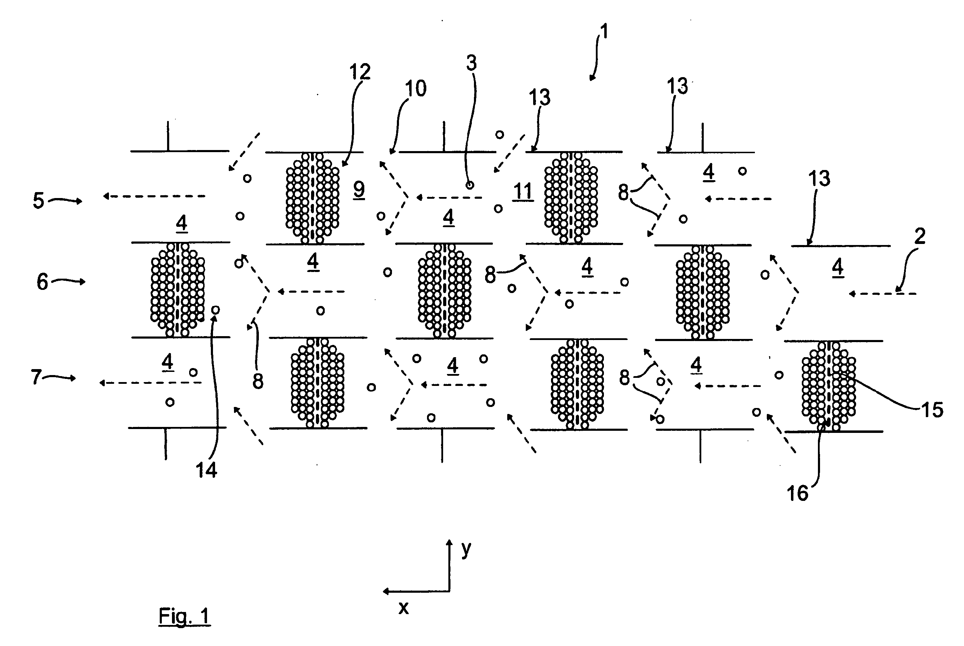

Die Fig. 1 zeigt schematisch einen Parallelschnitt durch wenigstens einen Teilbereich eines erfindungsgemäßen Partikelabscheiders 1 und damit quasi eine Draufsicht auf einen bestimmten Teilbereich des Partikelabscheiders 1, aus dem die Strömung des Abgasstroms 2 in Verbindung mit der Abscheidung von z. B. Feinstpartikeln 3 aus einem Abgasstrom vom Prinzip her dargestellt ist. Die Strömungsrichtung x entspricht hier der Hauptströmungsrichtung des gesamten Abgasstroms, unabhängig von etwaigen Umlenkungen.

Der Partikelabscheider 1 weist eine Vielzahl von hier beispielhaft im Wesentlichen gleich ausgebildeten Strömungszellen 4 auf, die in mehreren nebeneinanderliegenden Reihen 5, 6, 7 sowie jeweils hintereinander angeordnet sind. Die Strömungszellen 4 zweier benachbarter Reihen 5, 6, 7 sind hierbei so zueinander versetzt, dass Teilabgasströme 8 aus einem in Strömungsrichtung x gesehen mittleren bis hinteren Strömungsbereichabschnitt 9 jeder Strömungszelle 4 über in Strömungsrichtung x gesehen seitliche Durchströmöffnungen 10 in einen in Strömungsrichtung x gesehen vorderen bis mittleren Strömungsbereichabschnitt 11 von bezogen auf die Reihen 5, 6, 7 benachbarten Strömungszellen 4 einströmen. Dementsprechend bilden jeweils die in Strömungsrichtung x gesehen hinteren Durchströmöffnungen 10 jeweils die Ausströmöffnungen für die Teilabgasströme 8 aus, während die in Strömungsrichtung x gesehen vorderen Durchströmöffnungen 10 die Einströmöffnungen ausbilden. Dabei können sich, bezogen auf eine Strömmungszelle 4, die vorderen von den hinteren Durchströmungsöffnungen in ihrer Form und/oder Größe unterscheiden. Ebenso können die Durchströmungsöffnungen und/oder die Strömungszellen und/oder die Speichervolumina für die Partikel entlang der Strömungsrichtung (x) in Form und/oder Größe variieren, wodurch die Abscheidecharakteristik entlang der Strömung und damit zwischen dem Abscheiderein- und -austritt verändert werden kann.

Wie dies der Fig. 1 weiter entnommen werden kann, sind in Strömungsrichtung x gesehen vor bzw. nach den Durchströmöffnungen 10, d. h. im stirnseitigen Bereich der jeweils kammerartig ausgebildeten Strömungszellen 4 sogenannte Sacklöcher 12 ausgebildet und vorgesehen, die eine Art Totraumvolumen zur Verfügung stellen. Die Fünktionsweise des erfiridungsgemäßen Partikelabscheiders 1 wird nun ebenfalls anhand der Figur 1 näher erläutert:

Durch die bezogen auf die Hauptströmungsrichtung x in seitlichen Wandbereichen 13 jeder Strömungszelle 4 angeordneten Durchströmöffnungen 10 strömen die Teilabgasströme 8 in Strömungsrichtung x gesehen unter ständiger Umlenkung der Teilabgasströme 8 durch die Strömungszellen 4 und damit durch den Partikelabscheider 1, wobei die Teilabgasströme 8 aufgrund eines definierten vorgegebenen freien Strömungsquerschnittes in den Strömungszellen 4 eine solche Strömungsgeschwindigkeit im Bereich der Durchströmöffnungen 10 aufweisen, dass die Strömungsgeschwindigkeit im Bereich der stirnwandseitigen Sacklöcher 12 so reduziert ist, dass Feinstpartikel 3 einer bestimmten, vorgegebenen Masse und/oder Größenordnung vom Abgasstrom 2 weg in die Sacklöcher 12 der jeweiligen Strömungszellen 4 eindiffundieren können, wo sie zwischengespeichert werden. Diese Feinstpartikel-Diffusion ist mit dem Bezugszeichen 14 bezeichnet. Alternativ oder zusätzlich dazu können die Strömungsquerschnitte der Strömungszellen 4 aber auch so ausgelegt sein, dass der Abgasstrom in den Strömungszellen 4 auf eine solche Strömungsgeschwindigkeit beschleunigt wird, dass die durch das Ausströmen der Teilabgasströme 8 aus den seitlichen Durchströmöffnungen 10 bedingte plötzliche, scharfe Umlenkung des Abgasstroms dazu führt, dass z. B. auch Grobpartikel definierter Masse und/oder Größenordnung aufgrund ihrer Massenträgheit nicht mehr in den Teilabgasströmen 8 verbleiben, geradeaus weiterfliegen und von den Sacklöchern 12 aufgefangen werden, wo sie zwischengespeichert werden können.

Wie dies in Fig. 1 weiter schematisch eingezeichnet ist, können die, den Boden der Sacklöcher 12 bildende, Prallwände 15 perforiert ausgebildet sein, wobei die Gasdurchlässigkeit bevorzugt so mittels dieser Perforation 16 eingestellt ist, dass maximal 30% des Abgasstroms in der jeweiligen Strömungszelle 4 durch die Prallwand 15 hindurch aus der jeweiligen Strömungszelle 4 abströmen können. Alternativ dazu können die Prallwände 15 oder auch weitere Bereiche der Strömungszellen 4 auch aus einem gasdurchlässigen Material ausgebildet sein, und zwar wenigstens in Teilbereichen.

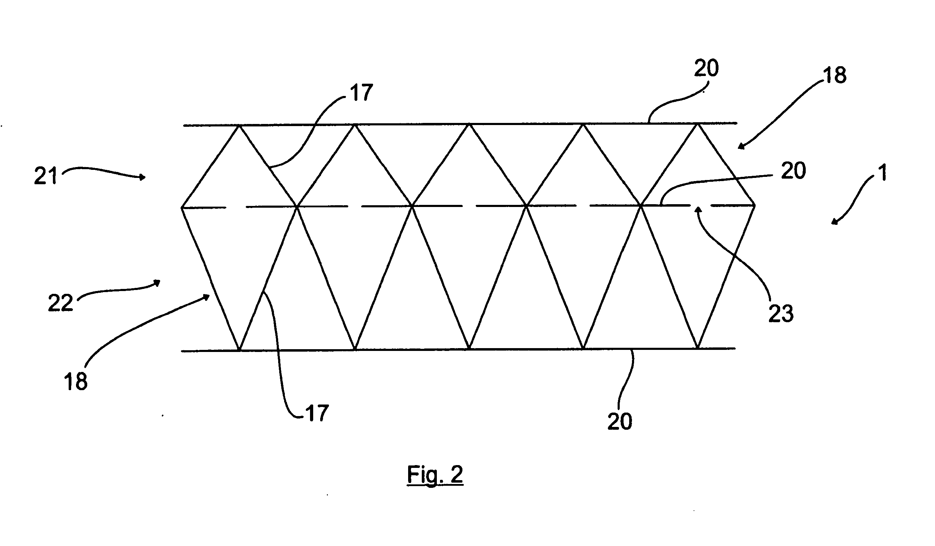

Wie dies insbesondere der Fig. 2 entnommen werden kann, ist der Partikelabscheider 1 bevorzugt als Plattenabscheider aus einer Mehrzahl von ein Plattenpaket ausbildenden übereinanderliegenden Abscheiderplatten ausgebildet, die in übereinanderliegenden Schichten miteinander verbunden werden. Als Darstellung ist ein Querschnitt durch ein Plattenpaket gewählt, wobei die Flussrichtung x sich in die Bildebene hinein ergibt. Die Plattenebenen können planar ausgeführt sein, aber auch gekrümmt, insbesondere wenn die Platten zu einem Plattenpaket aufgerollt werden.

Ein Teil der Abscheiderplatten ist durch dünne, dimensionsstabile Metallfolien 17 gebildet, die längs zur Strömungsrichtung gesehen ein Wellprofil 18 aufweisen und damit eine Welllage ausbilden.

Wie dies der Fig. 2 weiter zu entnehmen ist, können neben den Metallfolien 17, die ein Wellprofil 18 aufweisen, auch sogenannte Glattlagen als Abscheiderplatten vorgesehen sein, die hier durch eine glatte Metallfolie 20 gebildet sind und die im Wechsel zu den ein Wellprofil 18 aufweisenden Metallfolien 17 angeordnet sind. Mittels dieser glatten Metallfolien 20 wird sichergestellt, dass die beiden ein unterschiedliches Wellprofil 18 aufweisenden Metallfolien 17, die somit unterschiedliche Welllagen 21, 22 ausbildenden, nicht ineinanderrutschen können. In der durch die glatte Metallfolie 20 gebildeten Glattlage können auch Durchströmöffnungen 23 ausgebildet sein. Wie dies aus der Figur 2 weiter sehr gut ersichtlich ist, können die Welllagen 21, 22 eine gleiche Wellenfrequenz, jedoch unterschiedliche Wellenamplituden, d. h. Wellenhöhen aufweisen, wodurch sich in den unterschiedlichen Bereichen unterschiedliche Strömungsgeschwindigkeiten ergeben.

Um die Haftung der Partikel an der Oberfläche zu verbessern, können sämtliche Metallfolien 17, 20 mit einer hohen Oberflächenrauhigkeit versehen sein und/oder mit einer katalytisch aktiven Beschichtung beschichtet sein.

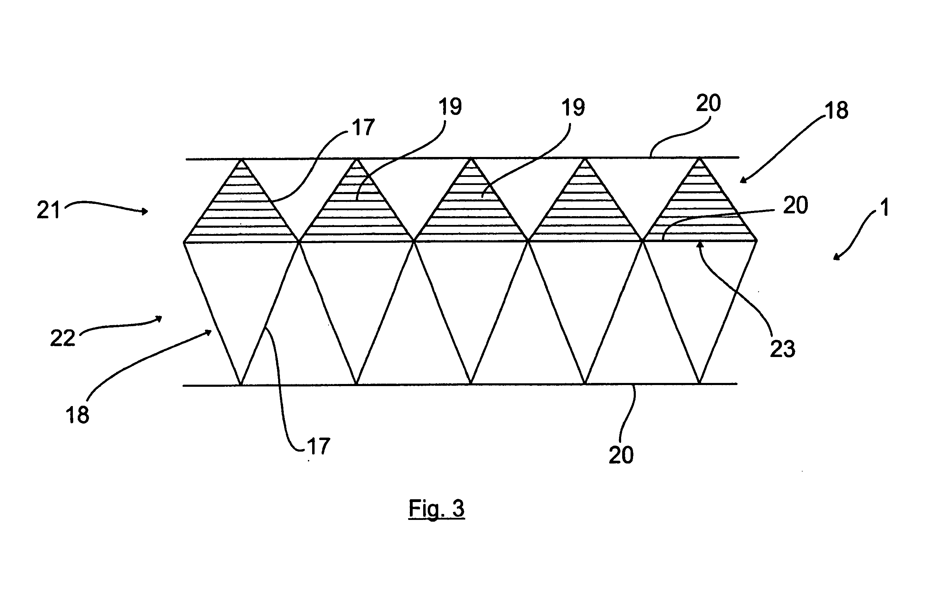

Die ein Wellprofil 18 aufweisenden Metallfolien 17 können zudem in Hauptströmungsrichtung x gesehen mit einen hier beispielhaft gleichen Abstand voneinander aufweisenden Einschnürungen als Eindellungen versehen sein, mittels denen auf besonders einfache Weise die zuvor beschriebenen Totraumvolumina und damit Strömungsunterbrechungen ausgebildet werden. In Fig. 3 ist dies anhand einer anderen Schnittebene im Vergleich zu Fig. 2 dargestellt: Hier sind ein Teil der oberen Kanäle durch Eindellungen 19 verschlossen. Stromauf dieser Eindellungen 19 muss die Strömung über die in Verbindung mit der Fig. 2 beschriebenen Durchströmöffnungen 23 in benachbarte Kanäle ausweichen.

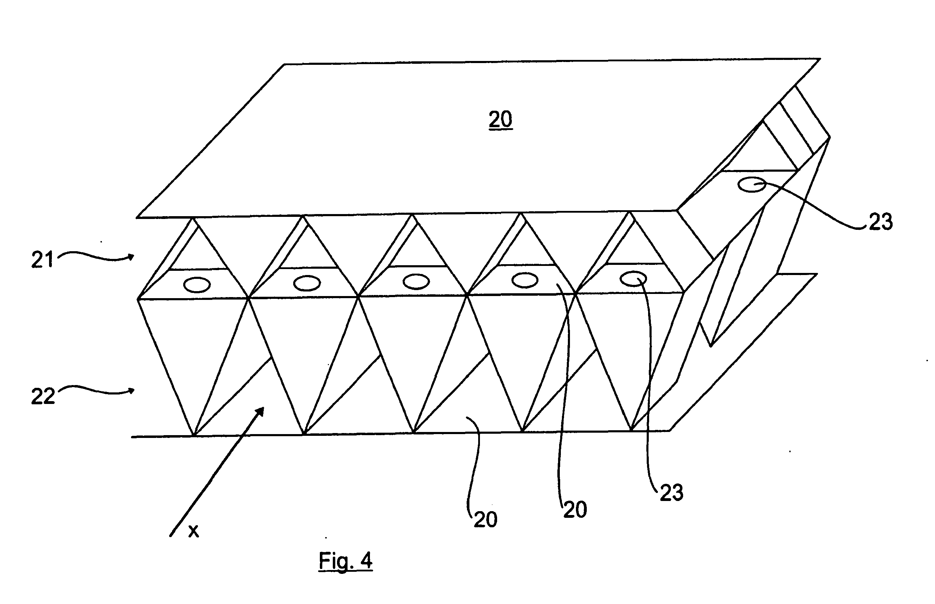

In Fig. 4 ist ein schematischer Ausschnitt aus einem erfindungsgemäßen Abscheider, bestehend aus zwei Welllagen 21, 22 mit zwischenliegenden Glattlagen 20 in perspektivischer Darstellung gezeigt. Über in den Glattlagen 20 angebrachte Durchströmöffnungen 23 wird der mit Partikeln beladene Gasstrom wechselseitig zwischen der Wellage 21 mit niedriger Amplitude, also hoher Strömungsgeschwindigkeit, und der Welllage 22 mit hoher Amplitude, also niedriger Strömungsgeschwindigkeit, geleitet. Dies gelingt durch wechselseitiges Verschließen der Kanäle, beispielsweise durch die eben beschriebene Eindellung der Metallfolien, die die Welllagen 21, 22 bilden.

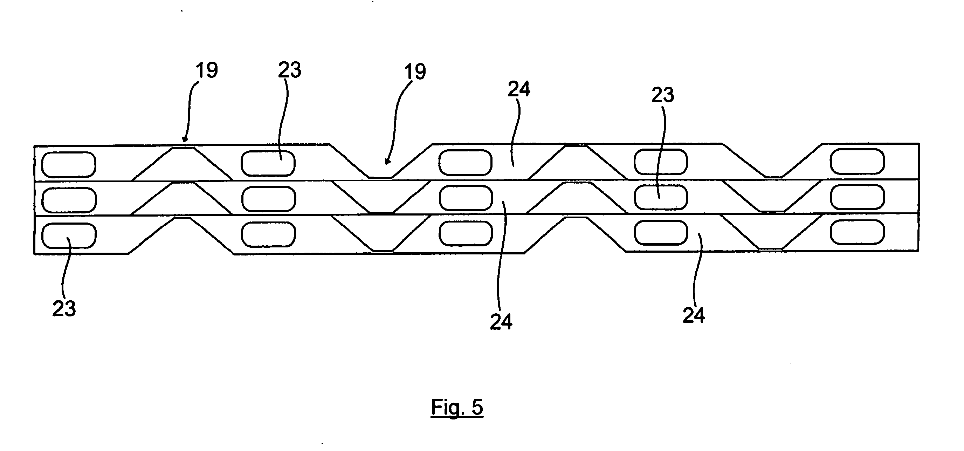

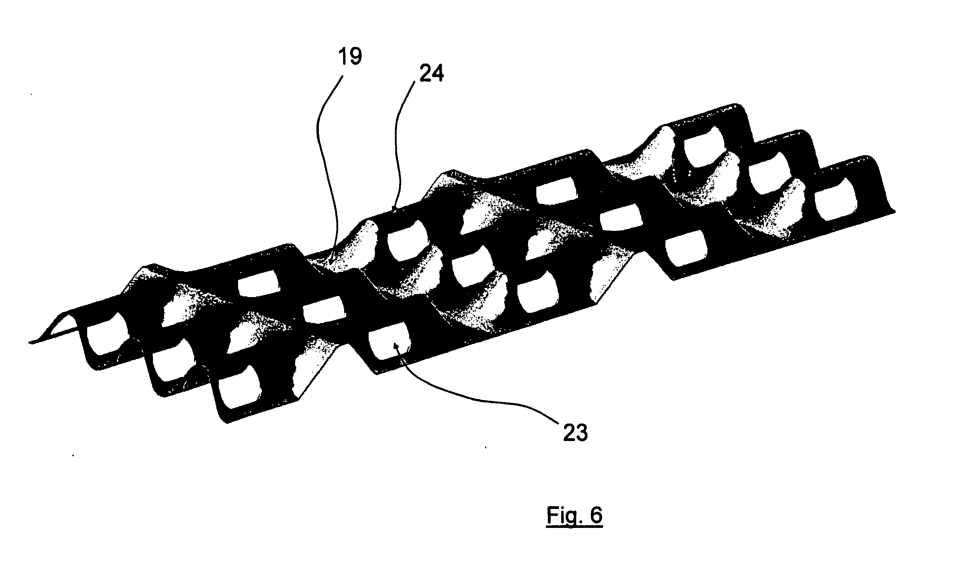

In der Fig. 5 ist nunmehr in schematischer Seitenansicht ein Wellenpaket dargestellt, das hier beispielhaft durch drei übereinanderliegende, in der Fig. 6 in einer Einzeldarstellung gezeigte Wellblechplatten 24 als Abscheiderplatten gebildet ist. Aus diesen beiden Darstellungen sind die einzelnen Durchströmöffnungen 23 bzw. auch die Eindellungen 19 sehr gut ersichtlich. Durch entsprechende Variation der Öffnungsquerschnitte der Durchströmöffnungen 23 lassen sich unterschiedliche Strömungsprofile darstellen und realisieren. Die gegebenenfalls zwischen den einzelnen Wellblechplatten 24 vorzusehenden Glattlagen sind hier aus Übersichtlichkeitsgründen nicht mit eingezeichnet.

## Patentansprüche

1. Partikelabscheider zur Abscheidung von Partikeln aus einem Abgasstrom einer Brennkraftmaschine, wobei der Partikelabscheider von einem Abgasstrom wenigstens bereichsweise durchströmbar ist, **dadurch gekennzeichnet, dass** im Partikelabscheider (1) eine vorgegebene Anzahl von Strömungszellen (4) ausgebildet ist, in die ein Abgasstrom (2) über einen bezogen auf die Hauptströmungsrichtung (x) seitlichen Wandbereich (13) der jeweiligen Strömungszelle (4) ein- und/oder ausströmt und in der wenigstens ein Speichervolumen (12) zur Einlagerung von Partikeln (3) aus dem Abgasstrom (2) ausgebildet ist, wobei in den von der Strömungszelle selbst ausgebildeten, von der Strömung in der Strömungszelle abgekoppelte Speichervolumina die Einlagerung und Zwischenspeicherung der Partikel statt findet und wobei benachbarte Strömungszellen (4) strömungsverbunden sind und jeweils wenigstens eine gemeinsame Durchströmöffnung (10) aufweisen, insbesondere dergestalt, dass diese gemeinsame Durchströmöffnung (10) für die eine Strömungszelle (4) eine Einströmöffnung für die benachbarte, andere Strömungszelle (4) eine Ausströmöffnung ausbildet.

2. Partikelabscheider nach Anspruch 1, **dadurch gekennzeichnet, dass** der Partikelabscheider (1) eine Mehrzahl von insbesondere in Hauptströmungsrichtung (x) des Abgasstromes (2) gesehen hintereinander und/oder nebeneinander und/oder übereinander angeordneten Strömungszellen (4) aufweist.

3. Partikelabscheider nach Anspruch 1 oder 2, **dadurch gekennzeichnet, dass** ein Speichervolumen (12) jeder Speicherzelle (4) durch wenigstens ein sacklochartiges Totraumvolumen, insbesondere durch wenigstens einen sacklochartigen Strömungszellen-Kanalabschnitt gebildet ist.

4. Partikelabscheider nach einem der Ansprüche 1 bis 3, **dadurch gekennzeichnet, dass** jede Strömungszelle (4) in einem vorgegebenen seitlichen Wandbereich (13) wenigstens eine, Ein- und/oder Ausströmöffnungen ausbildende Durchströmöffnung (10) aufweist.

5. Partikelabscheider nach Anspruch 4, **dadurch gekennzeichnet, dass** sich die Durchströmöffnungen (10) wenigstens zum Teil hinsichtlich ihrer Form und/oder Größe unterschiedlich ausgebildet sind.

6. Partikelabscheider nach den Ansprüchen 4 oder 5, **dadurch gekennzeichnet, dass** die Durchströmöffnungen (10) und/oder die Strömungszellen (4) und/oder die Speichervolumina für die Partikel (12) entlang der Strömungsrichtung (x) in ihrer Form und/oder Größe variiert werden.

7. Partikelabscheider nach einem der Ansprüche 3 bis 6, **dadurch gekennzeichnet, dass** das sacklochartige Totraumvolumen in Hauptströmungsrichtung (x) des Abgasstromes (2) gesehen in wenigstens einem stirnseitigen Endbereich jeder Strömungszelle (4) ausgebildet ist.

8. Partikelabscheider nach einem der Ansprüche 4 bis 7, **dadurch gekennzeichnet, dass** das sacklochartige Totraumvolumen in Hauptströmungsrichtung (x) des Abgasstroms (2) gesehen vor und/oder nach der wenigstens einen Durchströmöffnung (10) angeordnet ist.

9. Partikelabscheider nach einem der Ansprüche 4 bis 8, **dadurch gekennzeichnet, dass** jede Strömungszelle (4) wenigstens eine separate Einströmöffnung über die ein Abgasstrom in die Strömungszelle einströmt, und zusätzlich wenigstens eine separate Ausströmöffnung aufweist, über die ein Abgasstrom aus der Strömungszelle (4) ausströmt.

10. Partikelabscheider nach Anspruch 9, **dadurch gekennzeichnet, dass** die wenigstens eine Einströmöffnung einer Strömungszelle (4) in Hauptströmungsrichtung (x) des Abgasstromes (2) gesehen vor der wenigstens einen Ausströmöffnung dieser Strömungszelle (4) liegt.

11. Partikelabscheider nach Anspruch 10, **dadurch gekennzeichnet, dass** in Hauptströmungsrichtung (x) benachbarte Strömungszellen (4) so gegeneinander versetzt angeordnet sind, dass eine Ausströmöffnung einer ersten Strömungszelle (4) eine Einströmöffnung einer zweiten Strömungszelle (4) ausbildet.

12. Partikelabscheider nach einem der Ansprüche 3 bis 11, **dadurch gekennzeichnet, dass** das sacklochartige Totraumvolumen eine im Wesentlichen senkrecht zur Hauptströmungsrichtung (x) ausgerichtete Prallbodenwand (15) aufweist.

13. Partikelabscheider nach einem der Ansprüche 1 bis 12, **dadurch gekennzeichnet, dass** die Strömungszelle (4) wenigstens im Bereich des Speichervolumens (12) wenigstens teilweise gasdurchlässig ausgebildet ist, insbesondere indem vorgegebene Wandbereiche, bevorzugt eine Prallbodenwand (15), perforiert und/oder aus einem gasdurchlässigen Material hergestellt sind.

14. Partikelabscheider nach Anspruch 13, **dadurch gekennzeichnet, dass** die Gasdurchlässigkeit so eingestellt ist, dass eine vorgegebene Menge, bevorzugt maximal 30 % des Abgasstromes einer Strömungszelle (4) durch das Speichervolumen (12) hindurch aus der Strömungszelle (4) abströmt.

15. Partikelabscheider nach einem der Ansprüche 2 bis 14, **dadurch gekennzeichnet, dass** sämtliche Strömungszellen (4) insbesondere bezüglich ihrer Ausgestaltung und/oder Größe im Wesentlichen gleich ausgebildet sind.

16. Partikelabscheider nach einem der Ansprüche 2 bis 14, **dadurch gekennzeichnet, dass** sich hinsichtlich der Strömungsverhältnisse, insbesondere sich hinsichtlich der Strömungsgeschwindigkeit und/oder der Verweilzeit des Abgasstromes in der jeweiligen Strömungszelle (4), unterscheidende Strömungszellen (4) vorgesehen sind, zur Abscheidung von Partikeln (3) unterschiedlicher definierter Größenordnung und/oder unterschiedlicher definierter Masse in unterschiedlichen Strömungszellen (4).

17. Partikelabscheider nach Anspruch 16, **dadurch gekennzeichnet, dass** die unterschiedlichen Strömungszellen (4) jeweils unterschiedlich große freie Strömungsquerschnitte aufweisen.

18. Partikelabscheider nach einem der Ansprüche 1 bis 17, **dadurch gekennzeichnet, dass** der Partikelabscheider (1) Mittel aufweist, mit denen der Abgasstrom (2) im Partikelabscheider (1) wiederholt umgelenkt und/oder in Teilabgasströme (8) aufgeteilt und/oder beschleunigt und/oder verzögert wird.

19. Partikelabscheider nach einem der Ansprüche 1 bis 18, **dadurch gekennzeichnet, dass** der Partikelabscheider (1) wenigstens in Teilbereichen katalytisch aktiv ist, insbesondere mit einer katalytischen Beschichtung beschichtet ist.

20. Partikelabscheider nach einem der Ansprüche 1 bis 19, **dadurch gekennzeichnet, dass** der Partikelabscheider (1) aus einer Mehrzahl von miteinander in übereinanderliegenden Lagen verbundenen Abscheiderplatten (17, 20; 24) gebildet ist, die ein Plattenpaket ausbilden.

21. Partikelabscheider nach Anspruch 20, **dadurch gekennzeichnet, dass** die einzelnen Abscheiderplatten (17, 20; 24) durch Folien und/oder Matten vorgegebener Wandstärke gebildet sind.

22. Partikelabscheider nach Anspruch 20 oder 21, **dadurch gekennzeichnet, dass** die Abscheiderplatten (17, 20; 24) aus einem metallischen und/oder keramischen und/oder siliziumhaltigen und/oder siliziumkarbidhaltigen und/oder quarzhaltigen und/oder faserartigen Material hergestellt sind.

23. Partikelabscheider nach Anspruch 22, **dadurch gekennzeichnet, dass** die Abscheiderplatten (17, 20; 24) wenigstens in Teilbereichen eine Oberflächenstruktur mit definierter Rauheit bzw. Rauhtiefe aufweisen.

24. Partikelabscheider nach einem der Ansprüche 1 bis 23, **dadurch gekennzeichnet, dass** der Partikelabscheider (1) im Querschnitt betrachtet eine wabenförmige Struktur aufweist, wobei die einzelnen Waben jeweils einen Strömungsquerschnitt eines in Strömungsrichtung gesehen bestimmten Abschnittes eines Strömungskanals darstellen.

25. Partikelabscheider nach einem der Ansprüche 21 bis 24, **dadurch gekennzeichnet, dass** unterschiedliche Strömungsquerschnitte bzw. - bereiche und/oder Umlenkbereiche und/oder Auffangbereiche und/oder Speicherbereiche und/oder Durchströmöffnungen durch Materialumformungen und/oder Materialausnehmungen an vorgegebenen Bereichen wenigstens eines Teils der Abscheiderplatten (17, 20; 24) eines Plattenpaketes ausgebildet sind.

26. Partikelabscheider nach einem der Ansprüche 20 bis 25, **dadurch gekennzeichnet, dass** wenigstens ein Teil der Abscheiderplatten (17, 20; 24) eines Plattenpaketes im Wesentlichen identisch ausgebildet ist.

27. Partikelabscheider nach einem der Ansprüche 20 bis 26, **dadurch gekennzeichnet, dass** das Plattenpaket wenigstens teilweise aus im Wesentlichen quer zur Strömungsrichtung ein wellenartiges Profil (18) aufweisenden und eine Welllage (21, 22) ausbildenden Abscheiderplatten (17) aufgebaut ist.

28. Partikelabscheider nach Anspruch 27, **dadurch gekennzeichnet, dass** die eine Welllage (21, 22) ausbildenden Abscheiderplatten (17) in Strömungsrichtung voneinander beabstandete, vorzugsweise einen gleichen Abstand voneinander aufweisende, und im Wesentlichen quer zur Strömungsrichtung verlaufende, das Wellprofil (18) und damit den Längsverlauf der durch das Wellprofil (18) ausgebildeten Strömungskanäle unterbrechende Einschnürungen (19), insbesondere in Form von Eindellungen, aufweist.

29. Partikelabscheider nach Anspruch 27 oder 28, **dadurch gekennzeichnet, dass** die eine Welllage ausbildende Abscheiderplatte (17) im seitlichen Bereich vor bzw. nach jeder Einschnürung (19) wenigstens eine Durchströmöffnung (10) für den Abgasstrom aufweist.

30. Partikelabscheider nach Anspruch 28 oder 29, **dadurch gekennzeichnet, dass** in Strömungsrichtung gesehen aufeinanderfolgenden Einschnürungen (19) das Wellprofil (18) im Wechsel einmal von einer Oberseite und einmal von einer Unterseite her einschnüren.

31. Partikelabscheider nach einem der Ansprüche 27 bis 30, **dadurch gekennzeichnet, dass** unterschiedliche Strömungsquerschnitte durch unterschiedliche Amplituden und/oder Frequenzen des Wellprofils (18) wenigstens einer, insbesondere mehrerer unterschiedlicher Abscheiderplatte(n) (17) ausgebildet sind.

32. Partikelabscheider nach einem der Ansprüche 27 bis 31, **dadurch gekennzeichnet, dass** das Plattenpaket ebene, eine Glattlage ausbildende Abscheiderplatten (20) aufweist, die vorzugsweise im Wechsel mit eine Welllage (21, 22) ausbildenden Abscheiderplatten (17) angeordnet sind.

33. Partikelabscheider nach einem der Ansprüche 1 bis 32, **dadurch gekennzeichnet, dass** wenigstens ein Partikelabscheider (1) zusammen mit wenigstens einer Katalysatoreinrichtung in einem Schalldämpfer einer Abgasanlage angeordnet ist.

34. Verfahren zur Abscheidung von Partikeln aus einem Abgasstrom einer Bremskraftmaschine, bei dem ein Abgasstrom einen Partikelabscheider, insbesondere einen Partikelabscheider nach einem der Ansprüche 1 bis 33, wenigstens bereichsweise durchströmt, **dadurch gekennzeichnet, dass** ein Abgasstrom über einen bezogen auf die Hauptströmungsrichtung (x) seitlichen Wandbereich (13) in wenigstens eine Strömungszelle (4) des Partikelabscheiders (1) ein- und/oder ausströmt dergestalt, dass Partikel (3) aus dem Abgasstrom (2) in wenigstens einem strömungszellenseitig ausgebildeten Speichervolumen (12) abgeschieden werden, wobei benachbarte Strömungsszellen (4) strömungsverbunden sind und jeweils wenigstens eine gemeinsame Durchströmöffnung (10) aufweisen, insbesondere dergestalt, dass diese gemeinsame Durchströmöffnung (10) für die eine Strömungszelle (4) eine Einströmöffnung für die benachbarte, andere Strömungszelle (4) eine Ausströmöffnung ausbildet und wobei der Abgasstrom im Partikelabscheider (1) von Strömungszelle (4) zu Strömungszelle (4) unter Ausbildung von Totraumvolumen als Speichervolumen (12) und/oder unter Ausbildung von Turbulenzen umgelenkt wird.

35. Verfahren nach Anspruch 34, **dadurch gekennzeichnet, dass** die im Partikelabscheider (1) abgeschiedenen, kohlenstoffhaltigen Partikel mit Hilfe von, an einem Katalysator zur Oxidation von NO gebildetem, NO₂ oxidiert werden.

36. Verfahren nach Anspruch 34, **dadurch gekennzeichnet, dass** die im Partikelabscheider (1) abgeschiedenen, kohlenstoffhaltigen Partikel durch Anhebung der Abgastemperatur oxidiert werden.

## Claims

1. A particle separator for separating particles out of an exhaust stream of an internal combustion engine, it being possible for an exhaust stream to flow, at least in regions, through the particle separator, **characterised in that** a predetermined number of flow cells (4) is formed in the particle separator (1), into and/or out of which cells an exhaust stream (2) flows via a lateral - relative to the main direction of flow (x) - wall region (13) of the respective flow cell (4) and in which at least one storage volume (12) for incorporating particles (3) from the exhaust stream (2) is formed, the incorporation and intermediate storage of the particles taking place in the storage volumes formed by the flow cell itself, which are detached from the flow in the flow cell, and adjacent flow cells (4) being connected for flow purposes and in each case having at least one common throughflow opening (10), in particular such that this common throughflow opening (10) for the one flow cell (4) forms an inlet opening for the adjacent, other flow cell (4) an outlet opening [sic].

2. A particle separator according to Claim 1, **characterised in that** the particle separator (1) has a plurality of flow cells (4), viewed in particular in the main direction of flow (x) of the exhaust stream (2), arranged behind one another and/or next to one another and/or one above another.

3. A particle separator according to Claim 1 or 2, **characterised in that** a storage volume (12) of each storage cell (4) is formed by at least one blind-hole-like dead volume, in particular by at least one blind-hole-like flow-cell channel section.

4. A particle separator according to one of Claims 1 to 3, **characterised in that** each flow cell (4) has, in a predetermined lateral wall region (13), at least one throughflow opening (10) forming inlet and/or outlet openings.

5. A particle separator according to Claim 4, **characterised in that** the throughflow openings (10) are formed at least in part differently with regard to their shape and/or size.

6. A particle separator according to Claims 4 or 5, **characterised in that** the throughflow openings (10) and/or the flow cells (4) and/or the storage volumes for the particles (12) are varied in shape and/or size along the direction of flow (x).

7. A particle separator according to one of Claims 3 to 6, **characterised in that** the blind-hole-like dead volume, viewed in the main direction of flow (x) of the exhaust stream (2), is formed in at least one end-face end region of each flow cell (4).

8. A particle separator according to one of Claims 4 to 7, **characterised in that** the blind-hole-like dead volume, viewed in the main direction of flow (x) of the exhaust stream (2), is arranged before and/or after the at least one throughflow opening (10).

9. A particle separator according to one of Claims 4 to 8, **characterised in that** each flow cell (4) has at least one separate inlet opening via which an exhaust stream flows into the flow cell, and additionally at least one separate outlet opening, via which an exhaust stream flows out of the flow cell (4).

10. A particle separator according to Claim 9, **characterised in that** the at least one inlet opening of a flow cell (4), viewed in the main direction of flow (x) of the exhaust stream (2), lies in front of the at least one outlet opening of this flow cell (4).

11. A particle separator according to Claim 10, **characterised in that** adjacent - in the main direction of flow (x) - flow cells (4) are arranged offset relative to one another such that an outlet opening of a first flow cell (4) forms an inlet opening of a second flow cell (4).

12. A particle separator according to one of Claims 3 to 11, **characterised in that** the blind-hole-like dead volume has a baffle-plate wall (15) oriented substantially at right-angles to the main direction of flow (x).

13. A particle separator according to one of Claims 1 to 12, **characterised in that** the flow cell (4) at least in the region of the storage volume (12) is made to be at least partially gas-permeable, in particular by predetermined wall regions, preferably a baffle-plate wall (15), being perforated and/or made from a gas-permeable material.

14. A particle separator according to Claim 13, **characterised in that** the gas permeability is set such that a predetermined amount, preferably at most 30%, of the exhaust stream of a flow cell (4) flows away through the storage volume (12) out of the flow cell (4).

15. A particle separator according to one of Claims 2 to 14, **characterised in that** all the flow cells (4) are formed substantially identically in particular with regard to their configuration and/or size.

16. A particle separator according to one of Claims 2 to 14, **characterised in that** flow cells (4) which differ from one another with regard to the flow conditions, in particular with regard to the flow rate and/or the residence time of the exhaust stream in the respective flow cell (4), are provided in order to separate off particles (3) of different, defined size and/or different, defined mass in different flow cells (4).

17. A particle separator according to Claim 16, **characterised in that** the different flow cells (4) each have different sizes of free flow cross-sections.

18. A particle separator according to one of Claims 1 to 17, **characterised in that** the particle separator (1) has means by means of which the exhaust stream (2) in the particle separator (1) is repeatedly deflected and/or divided up into partial exhaust streams (8) and/or accelerated and/or decelerated.

19. A particle separator according to one of Claims 1 to 18, **characterised in that** the particle separator (1), at least in partial regions, is catalytically active, in particular is coated with a catalytic coating.

20. A particle separator according to one of Claims 1 to 19, **characterised in that** the particle separator (1) is formed from a plurality of separator plates (17, 20; 24) which are joined together in layers lying one above another, which form a plate stack.

21. A particle separator according to Claim 20, **characterised in that** the individual separator plates (17, 20; 24) are formed by sheets and/or mats of predetermined wall thickness.

22. A particle separator according to Claim 20 or 21, **characterised in that** the separator plates (17, 20; 24) are made from a metallic and/or ceramic and/or silicon-containing and/or silicon carbide-containing and/or quartz-containing and/or fibre-like material.

23. A particle separator according to Claim 22, **characterised in that** the separator plates (17, 20; 24) at least in partial regions have a surface structure with a defined roughness or surface roughness.

24. A particle separator according to one of Claims 1 to 23, **characterised in that** the particle separator (1), viewed in cross-section, has a honeycomb structure, the individual honeycombs each representing a flow cross-section of a certain section, viewed in the direction of flow, of a flow channel.

25. A particle separator according to one of Claims 21 to 24, **characterised in that** different flow cross-sections or regions and/or deflection regions and/or collection regions and/or storage regions and/or throughflow openings are formed by material shapings and/or material deformations on predetermined regions at least of part of the separator plates (17, 20; 24) of a plate stack.

26. A particle separator according to one of Claims 20 to 25, **characterised in that** at least a portion of the separator plates (17, 20; 24) of a plate stack is formed substantially identically.

27. A particle separator according to one of Claims 20 to 26, **characterised in that** the plate stack is constructed at least partially of separator plates (17) having a wavelike profile (18) and forming a corrugated layer (21, 22) substantially transversely to the direction of flow.

28. A particle separator according to Claim 27, **characterised in that** the separator plates (17) forming a corrugated layer (21, 22) in the direction of flow have spaced-apart constrictions (19), in particular in the form of indentations, preferably being at an equal distance from each other, and extending substantially transversely to the direction of flow, which interrupt the corrugated profile (18) and hence the longitudinal extent of the flow channels formed by the corrugated profile (18).

29. A particle separator according to Claim 27 or 28, **characterised in that** the separator plate (17) forming a corrugated layer has at least one throughflow opening (10) for the exhaust stream in the lateral region before and/or after each constriction (19).

30. A particle separator according to Claim 28 or 29, **characterised in that** constrictions (19) which succeed one another, viewed in the direction of flow, constrict the corrugated profile (18) alternately once from an upper side and once from a lower side.

31. A particle separator according to one of Claims 27 to 30, **characterised in that** different flow cross-sections are formed by different amplitudes and/or frequencies of the corrugated profile (18) of at least one, in particular a plurality of, different separator plate(s) (17).

32. A particle separator according to one of Claims 27 to 31, **characterised in that** the plate stack has flat separator plates (20) which form a smooth layer, which plates are preferably arranged alternately with separator plates (17) forming a corrugated layer (21,22).

33. A particle separator according to one of Claims 1 to 32, **characterised in that** at least one particle separator (1) together with at least one catalyst means is arranged in a silencer of an exhaust system.

34. A method for separating particles out of an exhaust stream of a braking-force machine [sic], in which an exhaust stream flows, at least in regions, through a particle separator, in particular a particle separator according to one of Claims 1 to 33, **characterised in that** an exhaust stream flows in and/or out via a lateral - relative to the main direction of flow (x) - wall region (13) into at least one flow cell (4) of the particle separator (1), such that particles (3) are separated out of the exhaust stream (2) in at least one storage volume (12) formed on the flow-cell side, with adjacent flow cells (4) being connected for flow purposes and in each case having at least one common throughflow opening (10), in particular such that this common throughflow opening (10) for the one flow cell (4) forms an inlet opening for the adjacent, other flow cell (4) an outlet opening [sic] and the exhaust stream in the particle separator (1) being deflected from flow cell (4) to flow cell (4), forming dead volume as storage volume (12) and/or forming turbulences.

35. A method according to Claim 34, **characterised in that** the carbon-containing particles separated off in the particle separator (1) are oxidised with the aid of NO₂ formed at a catalyst for the oxidation of NO.

36. A method according to Claim 34, **characterised in that** the carbon-containing particles separated off in the particle separator (1) are oxidised by raising the exhaust temperature.

## Revendications

1. Séparateur de particules pour séparer les particules d'une veine de gaz d'échappement émise par un moteur à combustion interne,
- le séparateur de particules étant traversé au moins par zones, par une veine de gaz d'échappement,
séparateur **caractérisé en ce que**
un nombre prédéfini de cellules d'écoulement (4) est réalisé dans le séparateur de particules (1) et dans ces cellules, arrive et/ou sort une veine de gaz d'échappement (2) par une zone de paroi (13) latérale par rapport à la direction principale d'écoulement (x) de la cellule d'écoulement respective (4), et dans lesquelles est réalisé au moins un volume accumulateur (12) pour stocker des particules (3) de la veine des gaz d'échappement (2), et
la collecte et le stockage intermédiaire des particules se font dans les volumes de stockage découplés de la veine d'écoulement dans la cellule d'écoulement, et qui sont réalisés par les cellules d'écoulement elles-mêmes, et
des cellules d'écoulement voisines communiquent et comportent au moins un orifice de passage (10), commun, réalisé en particulier pour constituer un orifice d'entrée pour l'une des cellules d'écoulement (4), et un orifice de sortie pour l'autre cellule d'écoulement, voisine (4).

2. Séparateur de particules selon la revendication 1,
**caractérisé en ce que**
le séparateur de particules (1) se compose d'un ensemble de cellules d'écoulement (4) les unes derrière les autres, notamment dans la direction principale d'écoulement (x) de la veine des gaz d'échappement (2), et/ou juxtaposées et/ou superposées.

3. Séparateur de particules selon la revendication 1 ou 2,
**caractérisé en ce que**
le volume accumulateur (12) de chaque cellule d'accumulation (4) est formé par au moins un volume mort en forme de trou borgne, notamment par au moins un segment de canal en forme de trou borgne de la cellule d'écoulement.

4. Séparateur de particules selon l'une des revendications 1 à 3,
**caractérisé en ce que**
chaque cellule d'écoulement (4) comporte dans une zone de paroi latérale (13), prédéfinie, au moins un orifice de passage (10) réalisé comme orifice d'entrée et/ ou comme orifice de sortie.

5. Séparateur de particules selon la revendication 4,
**caractérisé en ce que**
les orifices de passage (10) diffèrent au moins en partie par leur forme et/ou par leurs dimensions.

6. Séparateur de particules selon la revendication 4 ou 5,
**caractérisé en ce que**
les orifices de passage (10) et/ou les cellules d'écoulement (4) et/ou les volumes d'accumulation des particules (12), varient par la forme et/ou les dimensions dans la direction d'écoulement (x).

7. Séparateur de particules selon l'une des revendications 3 à 6,
**caractérisé en ce que**
vu dans la direction principale d'écoulement (x) de la veine des gaz d'échappement (2), le volume mort en forme de trou borgne est réalisé dans au moins une zone d'extrémité côté frontal de chaque cellule d'écoulement (4).

8. Séparateur de particules selon l'une des revendications 4 à 7,
**caractérisé en ce que**
le volume mort en forme de trou borgne est prévu dans la direction principale d'écoulement (x) de la veine des gaz d'échappement (2), en amont et/ou en aval d'au moins un orifice traversant (10).

9. Séparateur de particules selon l'une des revendications 4 à 8,
**caractérisé en ce que**
chaque cellule d'écoulement (4) comporte au moins un orifice d'entrée, séparé, par lequel la veine des gaz d'échappement arrive dans la cellule d'écoulement et de plus au moins un orifice de sortie, distinct, par lequel la veine des gaz d'échappement sort de la cellule d'écoulement (4).

10. Séparateur de particules selon la revendication 9,
**caractérisé en ce qu'**
au moins un orifice d'entrée d'une cellule d'écoulement (4) se situe dans la direction principale d'écoulement (x) de la veine des gaz d'échappement (2), devant au moins un orifice de sortie de cette cellule d'écoulement (4).

11. Séparateur de particules selon la revendication 10,
**caractérisé en ce que**
des cellules d'écoulement (4) voisines dans la direction principale d'écoulement (x), sont décalées les unes des autres pour qu'un orifice de sortie d'une première cellule d'écoulement (4) constitue l'orifice d'entrée d'une seconde cellule d'écoulement (4).

12. Séparateur de particules selon l'une des revendications 3 à 11,
**caractérisé en ce que**
le volume mort en forme de trou borgne présente une paroi de fond brise-jet (15), orientée pratiquement dans la direction perpendiculaire à la direction principale d'écoulement (x).

13. Séparateur de particules selon l'une des revendications 1 à 12,
**caractérisé en ce que**
la cellule d'écoulement (4) est au moins partiellement perméable aux gaz au moins dans la zone du volume accumulateur (12), notamment en ce que des zones de paroi, prédéfinies, de préférence une paroi de fond, brise-jet (15), sont perforées et/ou sont réalisées en une matière perméable aux gaz.

14. Séparateur de particules selon la revendication 13,
**caractérisé en ce que**
la perméabilité aux gaz est réglée pour qu'une quantité déterminée de préférence au maximum de 30 % de la veine des gaz d'échappement d'une cellule d'écoulement (4), sorte de la cellule d'écoulement (4) à travers le volume accumulateur (12).

15. Séparateur de particules selon l'une des revendications 2 à 14,
**caractérisé en ce que**
toutes les cellules d'écoulement (4) sont réalisées de manière pratiquement identique, notamment quant à leur forme et/ou leurs dimensions.

16. Séparateur de particules selon l'une des revendications 2 à 14,
**caractérisé en ce que**
du point de vue des conditions d'écoulement, notamment du point de vue de la vitesse d'écoulement et/ou du temps de séjour de la veine des gaz d'échappement dans la cellule d'écoulement (4) respective, on a des cellules d'écoulement (4), différentes pour séparer des particules (3) de type de dimensions définies, différentes et/ou de masse définie, différente, dans des cellules d'écoulement (4) différentes.

17. Séparateur de particules selon la revendication 16,
**caractérisé en ce que**
les cellules d'écoulement (4) différentes, ont chacune des sections libres de passage de dimensions différentes.

18. Séparateur de particules selon l'une des revendications 1 à 17,
**caractérisé en ce que**
le séparateur de particules (1) comporte des moyens à l'aide desquels la veine des gaz d'échappement (2) est déviée de façon répétée dans le séparateur de particules (1) et/ou est divisée en veine partielle de gaz (8) et/ou est accélérée et/ou est freinée.

19. Séparateur de particules selon l'une des revendications 1 à 18,
**caractérisé en ce que**
le séparateur à particules (1) a une activité catalytique au moins dans les zones partielles, notamment il est revêtu d'un revêtement catalytique.

20. Séparateur de particules selon l'une des revendications 1 à 19,
**caractérisé en ce que**
le séparateur de particules (1) se compose d'un ensemble de plaques de séparation (17, 20 ; 24) reliées, réparties dans les couches superposées, et formant un paquet de plaques.

21. Séparateur de particules selon la revendication 20,
**caractérisé en ce que**
les différentes plaques de séparateur (17, 20 ; 24) sont formées par des films ou des nappes d'épaisseur de paroi prédéfinie.

22. Séparateur de particules selon la revendication 20 ou 21,
**caractérisé en ce que**
les plaques séparatrices (17, 20 ; 24) sont réalisées en une matière métallique et/ou céramique et/ou contenant du silicium et/ou contenant du carbure de silicium et/ou contenant du quartz et/ou contenant des matières fibreuses.

23. Séparateur de particules selon la revendication 22,
**caractérisé en ce que**
les plaques séparatrices (17, 20 ; 24) comportent au moins dans des zones partielles, une structure de surface superficielle ayant une rugosité ou une profondeur de rugosité, définies.

24. Séparateur de particules selon l'une des revendications 1 à 23,
**caractérisé en ce que**
considéré en section, le séparateur de particules (1) a une structure en forme d'alvéoles et les différentes alvéoles ont une section d'écoulement correspondant à un segment déterminé d'un canal d'écoulement vu dans la direction d'écoulement.

25. Séparateur de particules selon l'une des revendications 21 à 24,
**caractérisé en ce que**
des zones prédéfinies d'au moins une partie des plaques séparatrices (17, 20 ; 24) d'un paquet de plaques, ont des sections d'écoulement différentes ou des zones et/ou des zones de déviation et/ou des zones de réception et/ou des zones d'accumulation et/ou des orifices de passage par des déformations de matière et/ou des cavités de matière dans des zones prédéfinies.

26. Séparateur de particules selon l'une des revendications 20 à 25,
**caractérisé en ce qu'**
au moins une partie des plaques séparatrices (17 ; 20 ; 24) d'un paquet de plaques est réalisée de manière essentiellement identique.

27. Séparateur de particules selon l'une des revendications 20 à 26,
**caractérisé en ce que**
le paquet de plaques est réalisé au moins en partie avec des plaques séparatrices (17) formant un profil ondulé (18) essentiellement dans la direction transversale à la direction d'écoulement et une couche d'ondulations (21, 22).

28. Séparateur de particules selon la revendication 27,
**caractérisé en ce que**
une couche d'ondulations (21 ; 22) formée par des plaques séparatrices (17) écartées dans la direction de l'écoulement, de préférence de manière équidistante, et dirigée pratiquement transversalement dans la direction de l'écoulement, formant le profil ondulé (18) comporte des rétrécissements (19) notamment sous la forme d'enfoncements, interrompt le tracé longitudinal des canaux d'écoulement formés par le profil ondulé (18).

29. Séparateur de particules selon la revendication 27 ou 28,
**caractérisé en ce que**
la plaque séparatrice (17) formant une couche d'ondulations, comporte dans la zone latérale, devant ou après chaque rétrécissement (19), au moins un orifice traversant (10) pour la veine des gaz d'échappement.

30. Séparateur de particules selon la revendication 28 ou 29,
**caractérisé en ce que**
les rétrécissements (19) qui se suivent dans la direction d'écoulement, rétrécissent le profil ondulé (18), en alternance, par le côté supérieur et par le côté inférieur.

31. Séparateur de particules selon l'une des revendications 27 à 30,
**caractérisé par**
des segments d'écoulement différents réalisés par des amplitudes différentes et/ou des fréquences du profil ondulé (18) d'au moins une plaque séparatrice (17) et notamment de plusieurs plaques séparatrices différentes.

32. Séparateur de particules selon l'une des revendications 27 à 31,
**caractérisé en ce que**
le paquet de plaques comporte des plaques séparatrices (20) formant une couche lisse, qui alterne de préférence avec des plaques séparatrices (17) formant une couche d'ondulations (21, 22).

33. Séparateur de particules selon l'une des revendications 1 à 32,
**caractérisé en ce qu'**
au moins un séparateur de particules (1) avec au moins une installation de catalyseur est prévu dans un pot amortisseur d'une installation de gaz d'échappement.

34. Procédé de séparation de particules d'une veine de gaz d'échappement émise par un moteur à combustion interne, selon lequel,
une veine de gaz d'échappement traverse un séparateur de particules, notamment un séparateur de particules selon l'une des revendications 1 à 33, par une traversée au moins par zones,
procédé **caractérisé en ce que**
une veine de gaz d'échappement pénètre et/ou sort d'une zone de paroi (13) latérale par rapport à la direction principale d'écoulement (x) dans au moins une cellule d'écoulement (4) du séparateur de particules (1) de façon que,
les particules (3) se déposent de la veine des gaz d'échappement (2) dans au moins un volume accumulateur (12) réalisé du côté d'une cellule d'écoulement,
les cellules d'écoulement (4), voisines, communiquant dans le sens de passage du fluide et ont au moins un orifice de passage (10) commun, cet orifice de passage commun (10) étant notamment réalisé pour former un orifice d'entrée pour l'une des cellules d'écoulement (4) et un orifice de sortie pour l'autre cellule d'écoulement (4), voisine, et
la veine des gaz d'échappement est déviée dans le séparateur de particules (1) d'une cellule d'écoulement (4) à l'autre cellule d'écoulement (4) en développant des volumes morts comme volumes accumulateurs (12) et/ou en développant des turbulences.

35. Procédé selon la revendication 34,
**caractérisé en ce que**
les particules contenant du carbone, déposées dans le séparateur de particules (1), sont oxydées l'aide de NO₂ formé sur un catalyseur d'oxydation de NO.

36. Procédé selon la revendication 34,
**caractérisé en ce que**
les particules contenant du carbone déposées dans le séparateur de particules (1), sont oxydées par élévation de la température des gaz d'échappement.
